(19) Europäisches Patentamt

European Patent Office

Office européen des brevets

(11) **EP 1 358 098 B1**

(12) **FASCICULE DE BREVET EUROPEEN**

(45) Date de publication et mention
de la délivrance du brevet:
**14.12.2005 Bulletin 2005/50**

(21) Numéro de dépôt: **01995741.4**

(22) Date de dépôt: **19.12.2001**

(51) Int Cl.⁷: **B60T 8/40**, B60T 13/68

(86) Numéro de dépôt international:
**PCT/FR2001/004063**

(87) Numéro de publication internationale:
**WO 2002/053436 (11.07.2002 Gazette 2002/28)**

(54) **INSTALLATION DE FREINAGE HYDRAULIQUE POUR VEHICULE COMPORTANT UN SIMULATEUR ACTIF.**

HYDRAULISCHES FAHRZEUGBREMSSYSTEM MIT AKTIVEM SIMULATOR

VEHICLE HYDRAULIC BRAKING SYSTEM WITH AN ACTIVE SIMULATOR

(84) Etats contractants désignés:
**AT BE CH CY DE DK ES FI FR GB GR IE IT LI LU MC NL PT SE TR**

(30) Priorité: **02.01.2001 FR 0100055**

(43) Date de publication de la demande:
**05.11.2003 Bulletin 2003/45**

(73) Titulaire: **ROBERT BOSCH GMBH**
**70442 Stuttgart (DE)**

(72) Inventeurs:
• **PASQUET, Thierry**
**F-93190 Livry-Gargan (FR)**
• **QUIRANT, Werner**
**71717 Bleistein (DE)**

(74) Mandataire: **Hurwic, Aleksander Wiktor**
**Bosch Systèmes de Freinage,**
**126, rue de Stalingrad**
**93700 Drancy (FR)**

(56) Documents cités:
**WO-A-98/45151**     **DE-A- 19 757 996**
**DE-A- 19 914 400**     **DE-C- 4 102 497**
**US-A- 6 050 653**

• **PATENT ABSTRACTS OF JAPAN vol. 2000, no. 03, 30 mars 2000 (2000-03-30) & JP 11 341604 A (NISSAN MOTOR CO LTD), 10 décembre 1999 (1999-12-10)**

## Description

L'inventiôn est relative à une installation de freinage hydraulique pour véhicule, du genre de celles qui comportent, pour actionner des freins de roues :

- un système de freinage de service alimenté en liquide sous pression par une centrale hydraulique à énergie extérieure ;
- un système de freinage de secours à énergie musculaire ;
- un organe de commande manuelle dont l'avance actionne le système de freinage de service ou, en cas de défaillance de ce dernier, le freinage de secours ;
- un maître-cylindre avec au moins un piston primaire dont le déplacement est assuré par l'organe de commande manuelle ;
- au moins une valve de sécurité permettant soit d'isoler le maître-cylindre des freins de roues lorsque le freinage de service fonctionne normalement, soit, en cas de défaillance du freinage de service, de relier le maître-cylindre à au moins un frein de roue ;
- un simulateur de sensation pour opposer à l'avance de l'organe de commande manuelle une réaction reflétant le déroulement du freinage, ce simulateur comprenant un cylindre dans lequel coulisse un piston de simulateur soumis dans un sens à une pression de liquide provenant du maître-cylindre et, dans le sens opposé, à une force antagoniste dépendant de la course de l'organe de commande manuelle ;
- des électrovalves d'admission de liquide sous pression et des électrovalves d'échappement reliées aux freins de roues ;
- des capteurs pour saisir différents paramètres du freinage, notamment la course de l'organe de commande manuelle, et des pressions en différents points de l'installation ;
- et un calculateur, relié aux divers capteurs, propre à commander les électrovalves de manière à assurer les pressions souhaitées dans les freins de roues, la force antagoniste dans le simulateur résultant de l'action, sur une surface du piston de simulateur, d'une pression modulée établie à partir de la pression de liquide fournie par la centrale hydraulique.

Une installation de freinage de ce type est connue, par exemple d'après DE 41 02 497 C.

Dans une telle installation, lors d'un fonctionnement normal en mode de freinage de service, le maître-cylindre est isolé et le liquide contenu dans le maître-cylindre ne peut refluer vers les freins de roues. L'organe de commande manuelle, par exemple pédale de frein ou levier de frein à main, conserve une course normale d'actionnement, dépendant de la force exercée, grâce au simulateur de sensation comportant un cylindre relié au maître-cylindre pour permettre des transferts de liquide.

Les installations connues donnent satisfaction et permettent de créer une loi de variation de la force à exercer sur l'organe de commande manuelle, en fonction de la course, qui procure à l'utilisateur une sensation semblable à celle qui serait obtenue si la pression dans les freins de roues résultait directement de la pression provenant du maître-cylindre et de l'effort musculaire sur la pédale de frein.

Toutefois, dans ces installations connues, la loi de variation de la force à exercer sur l'organe de commande manuelle est relativement figée et ne peut pas être modifiée de manière simple et rapide.

Or, pour des raisons diverses, notamment suivant le type de voiture, il est souhaitable de pouvoir modifier de manière aussi simple et rapide que possible cette loi de variation.

En outre, il est souhaitable que le simulateur consomme le moins de liquide possible pour que le freinage de secours réalisé à l'aide du maître-cylindre reste le plus efficace possible.

L'invention a pour but, surtout, de fournir une installation de freinage qui réponde mieux que jusqu'à présent aux diverses exigences rappelées ci-dessus et qui, notamment, permette de modifier rapidement et aisément la loi de variation de la force sur l'organe de commande manuelle en fonction de la course.

Il est en outré souhaitable que la solution proposée soit d'une réalisation relativement simple et particulièrement fiable.

Selon l'invention, une installation de freinage hydraulique pour véhicule, du genre défini précédemment, est caractérisée par le fait que la pression modulée est commandée par le calculateur suivant une loi déterminée, modifiable à volonté, en fonction de la course de la pédale, et par le fait que la force antagoniste, dans le simulateur, est la résultante d'une force élastique agissant sur le piston de simulateur en sens opposé à la pression de liquide provenant du maître-cylindre et d'une force variable opposée à la force élastique, cette force variable étant produite par la pression modulée qui agit sur une surface du piston de simulateur.

Il est ainsi possible de programmer, dans le calculateur, toute loi de variation souhaitée pour la force sur l'organe de commande manuelle en fonction de la course, sans avoir à modifier autrement l'installation.

De préférence, la surface du piston de simulateur soumise à la pression modulée délimite une chambre de volume variable reliée, en parallèle, à une électrovalve d'admission de liquide sous pression fourni par la centrale hydraulique, et une électrovalve d'échappement reliée à la bâche, l'ouverture et la fermeture de ces électrovalves étant commandées par le calculateur pour que la pression dans la chambre du simulateur suive la loi souhaitée.

Les électrovalves reliées à la chambre du simulateur sont de préférence du type "tout ou rien". La chute de pression entre l'entrée et la sortie des électrovalves peut être linéaire en fonction de l'intensité du courant de commande.

Avantageusement, la force antagoniste, dans le simulateur, est la résultante d'une force élastique agissant sur le piston de simulateur en sens opposé à la pression de liquide provenant du maître-cylindre et d'une force variable opposée à la force élastique, cette force variable étant produite par la pression modulée qui agit sur une surface du piston de simulateur.

La force élastique peut être produite par au moins un moyen de rappel élastique. Ce moyen de rappel élastique comprend avantageusement un ressort pneumatique.

Le cylindre du simulateur peut comporter deux alésages coaxiaux de diamètres différents, qui communiquent, et un piston étagé comportant une partie de petit diamètre qui coulisse de manière étanche dans l'alésage de petit diamètre, et une partie de plus grand diamètre qui coulisse de manière étanche dans l'alésage de grand diamètre, le fond de l'alésage de petit diamètre comportant un orifice relié au maître-cylindre de sorte que la pression de liquide du maître-cylindre est appliquée sur la petite section du piston étagé, tandis qu'une chambre annulaire est formée entre la paroi de transition de l'alésage et la grande section du piston étagé, cette chambre annulaire étant reliée en parallèle aux électrovalves respectivement d'admission et d'échappement.

Le fond du cylindre de simulateur fermant l'alésage de grande section du côté opposé à l'alésage de petite section peut comporter une ouverture pour le passage d'une tige qui vient en appui contre la grande section du piston étagé et qui exerce sur ce piston la force élastique. Cette tige peut être solidaire d'un piston pneumatique qui coulisse dans un cylindre pneumatique lui-même solidaire du cylindre de simulateur, ce cylindre pneumatique étant relié à une source de pression pneumatique extérieure, en particulier prévue pour une suspension.

Un clapet antiretour peut être disposé sur une canalisation d'air sous pression reliée au cylindre pneumatique, ce clapet permettant l'entrée d'air sous pression dans le cylindre et s'opposant à sa sortie.

Un ressort mécanique de compression peut être disposé dans le cylindre pneumatique pour agir sur le piston pneumatique dans le même sens que la pression d'air.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif.

Sur ces dessins :

Fig.1 est un schéma d'une installation de freinage hydraulique selon l'invention ;

Fig.2 est un schéma simplifié à plus grande échelle du simulateur et du maître-cylindre ;

Fig.3 illustre un exemple de loi de variation de la force sur l'organe de commande manuelle en fonction de la course, et de la pression modulée ;

Fig.4, enfin, illustre la variation de la pression pneumatique dans le cylindre pneumatique, en fonction de la course du piston.

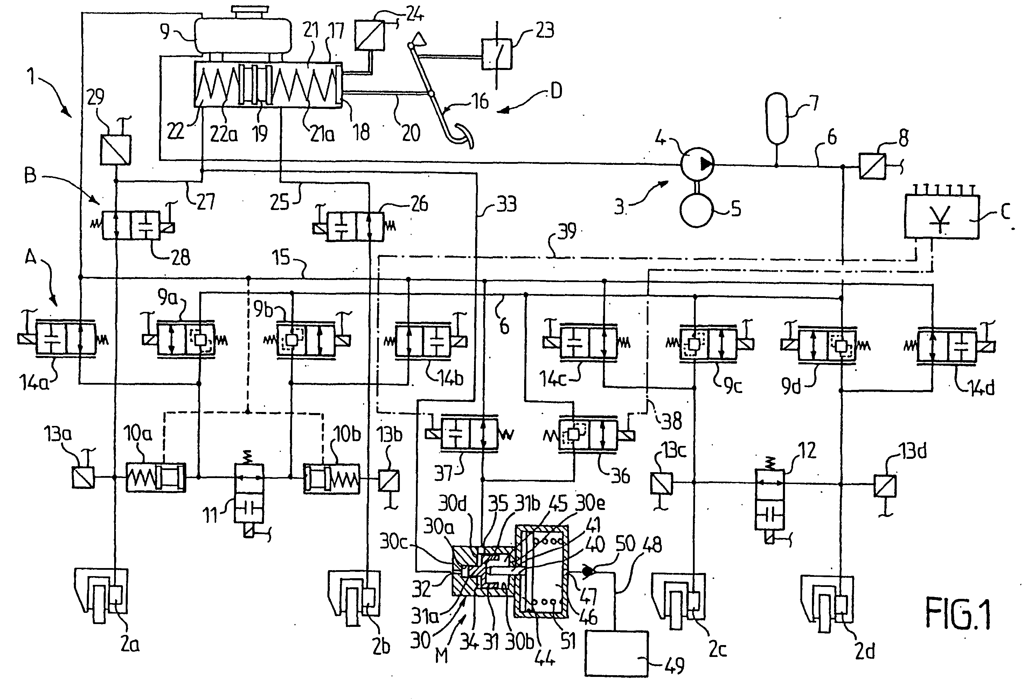

En se reportant à Fig.1, on peut voir une installation 1 de freinage hydraulique pour véhicule automobile pour actionner des freins de roues 2a, 2b pour les roues avant et 2c, 2d pour les roues arrière. Chaque frein de roue comporte de manière classique un cylindre dans lequel un piston peut être déplacé, par un liquide sous pression, afin d'appliquer un patin de frein contre un élément, disque ou tambour, lié en rotation à la roue à freiner.

L'installation 1 comprend un système de freinage de service A alimenté en liquide sous pression par une centrale hydraulique 3 à énergie extérieure, et un système de freinage de secours B à énergie musculaire.

La centrale hydraulique 3 comprend une pompe 4 entraînée par un moteur 5, par exemple un moteur électrique. La pompe 4 fournit du liquide sous pression à une ligne d'alimentation principale 6 sur laquelle est monté un accumulateur oléopneumatique 7. Un capteur de pression 8 fournissant en sortie une grandeur électrique représentant la valeur de la pression dans la ligne 6 est également branché sur cette ligne. L'aspiration de la pompe 4 est reliée à un réservoir 9 de liquide hors pression , ou bâche.

La ligne 6 de liquide sous pression est reliée en parallèle par des électrovalves 9a, 9b, 9c, 9d aux freins de roues respectifs 2a-2d. Ces électrovalves sont à deux positions, respectivement ouverte ou fermée, et sont pilotées par un calculateur programmable, ou microcontrôleur C. Pour éviter de surcharger le dessin, les liaisons électriques entre les bobines de commande des électrovalves et le calculateur C ne sont représentées que par un début de ligne.

En position de repos, les valves 9a-9d sont fermées, comme illustré sur Fig. 1. La sortie d'une valve 9a, 9b est reliée à un frein de roue avant 2a, 2b par l'intermédiaire d'un séparateur hydraulique respectivement 10a, 10b. Les valves 9c, 9d ont leur sortie reliée directement aux freins de roues arrière 2c, 2d. Une valve 11 d'équilibre de pression est branchée entre les sorties des valves 9a, 9b. Une autre valve 12 d'équilibre de pression est branchée entre les sorties des valves 9c, 9d.

Un capteur de pression 13a, 13b, 13c, 13d est branché sur chaque ligne d'alimentation des freins 2a-2d pour fournir en sortie une grandeur électrique représentative de la pression appliquée. Les sorties de ces capteurs 13a-13d sont reliées au calculateur C par des lignes non représentées. La sortie du capteur 8 est aussi reliée à C.

Des électrovalves d'échappement 14a, 14b, 14c, 14d sont branchées en parallèle avec les électrovalves d'admission 9a - 9d sur les lignes reliées aux entrées des freins de roues. Ces valves 14a-14d sont à deux positions, respectivement ouverte ou fermée, et sont reliées à une ligne 15 assurant le retour du liquide à la bâche 9. Au repos, les valves 14a-14d sont en position ouverte comme illustré sur Fig.1.

Les valves d'échappement 14a-14d sont également pilotées par le calculateur C qui comporte des sorties reliées à chaque bobine de commande des valves 14a-14d.

L'installation comprend un organe de commande manuelle D généralement constitué par une pédale de frein 16, et un maître-cylindre 17 dans lequel peuvent coulisser un piston primaire 18 et un piston secondaire 19, de même section S1. La pédale 16 est liée au piston 18 par une tige 20 articulée sur la pédale. On désigne par "avance" un déplacement de la pédale 16 vers le maître-cylindre 17, ce qui entraîne un déplacement du piston 18 vers le piston secondaire 19 et le fond du cylindre 17 opposé.

Une chambre primaire 21 remplie de liquide est formée entre le piston 18 et le piston 19. Un ressort 21 a est disposé dans cette chambre entre les deux pistons. Une chambre secondaire 22, également remplie de liquide, est formée entre le piston 19 et le fond du maître-cylindre 17 éloigné du piston 18. Un ressort 22a est disposé dans la chambre 22.

Un contact électrique 23 sensible à l'avance de la pédale 16 est prévu de manière classique pour commander les feux de "stop". Une borne de ce contact 23 est reliée à une borne du calculateur C qui actionne le système de freinage de service A en réponse à l'avance de la pédale 16. Un capteur 24 de la course de la pédale 16 est en outre prévu pour envoyer un signal électrique représentatif à une autre borne d'entrée du calculateur C. Le capteur 24 peut fournir, par exemple, une information sur l'amplitude du déplacement de la pédale 16 ainsi que sur sa vitesse de déplacement.

Les deux chambres 21, 22 du maître-cylindre sont reliées au réservoir 9 par l'intermédiaire d'un clapet antiretour (non représenté) permettant l'alimentation des chambres 21, 22 et empêchant un reflux.

La chambre primaire 21 est reliée, par une canalisation 25 munie d'une électrovalve 26 de sécurité, ou d'arrêt, au frein de roue 2b. L'électrovalve 26 est commandée par le calculateur C. Elle est du type à deux positions, ouverte ou fermée ; elle se trouve en position ouverte lorsque l'installation est au repos.

La chambre 22 est reliée par une ligne 27 et une électrovalve 28 au frein de roue 2a. Un capteur de pression 29 est branché sur la ligne 27 entre le maître-cylindre 17 et l'électrovalve 28. Le capteur 29 fournit en sortie un signal électrique qui est envoyé par une liaison, non représentée, sur une entrée du calculateur C.

L'installation de freinage 1 comporte en outre un simulateur M d'actionnement de frein pour opposer à l'avance de la pédale de frein 16 une réaction reflétant le déroulement du freinage.

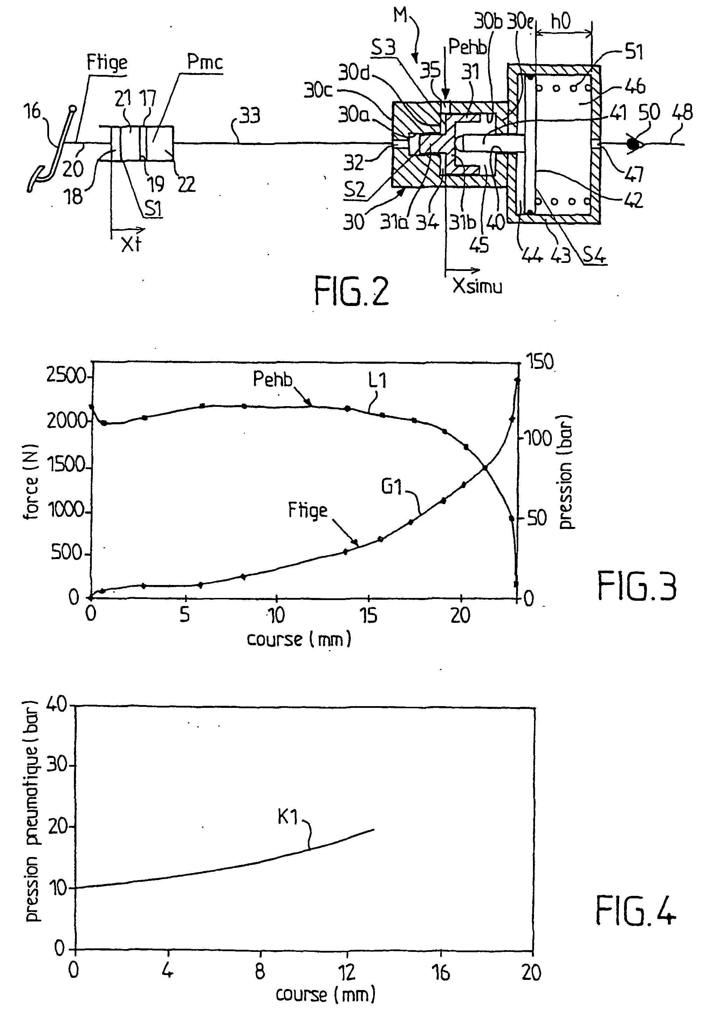

Le simulateur M comprend un cylindre 30 (voir Figs. 1 et 2) dans lequel coulisse un piston 31 de simulateur.

Le cylindre 30 comporte deux alésages coaxiaux 30a, 30b, de diamètres différents, qui communiquent entre eux. L'alésage 30a, de plus faible diamètre, est limité du côté opposé à l'alésage 30b par une paroi 30c, dans laquelle est prévu un orifice central 32. Cet orifice 32 est relié, par une canalisation 33, à l'une des chambres du maître-cylindre 17, la chambre secondaire 22 dans l'exemple représenté.

Le piston 31 est un piston étagé comportant une partie 31a de petit diamètre, de section S2, qui coulisse de manière étanche dans l'alésage 30a, et une partie de plus grand diamètre 31b qui coulisse de manière étanche dans l'alésage 30b. La partie 31 b est bordée par une jupe cylindrique dont la concavité est tournée du côté opposé à l'alésage 30a.

Une chambre annulaire 34, de section S3, est formée entre la partie 31b et la paroi de transition 30d entre les alésages 30a et 30b. Cette chambre annulaire 34 entoure la partie 31a, et son volume varie selon la position du piston 31 suivant l'axe du cylindre 30. Un orifice 35 est prévu dans la paroi du cylindre 30 pour déboucher, dans l'alésage 30b, au voisinage de la paroi 30d formant le fond de la chambre 34.

L'orifice 35 est relié en parallèle (Fig.1) à une électrovalve 36 d'admission de liquide sous pression et à une électrovalve 37 d'échappement. Les électrovalves 36, 37 sont du type "tout ou rien", à deux positions respectivement ouverte ou fermée. De préférence la chute de pression entre l'entrée et la sortie des valves 36,37 varie linéairement en fonction de l'intensité du courant de commande de ces valves. Les bobines de commande des valves 36, 37 sont reliées par des lignes électriques 38 et 39 à deux bornes du calculateur C. La valve 36 a son entrée reliée à la conduite 6 d'alimentation en liquide sous pression provenant de la centrale hydraulique 3. La valve 37 a sa sortie reliée à la conduite 15 de retour du liquide au réservoir 9.

Le calculateur C commande les valves 36 et 37 en fonction de la course de la pédale 16 pour établir une pression de commande modulée Pehb qui est appliquée dans la chambre annulaire 34 et qui s'exerce sur la surface annulaire S3 du piston 31.

Le fond 30e , fermant l'alésage 30b à l'opposé de l'alésage 30a, comporte une ouverture 40 pour le passage d'une tige 41, coaxiale au cylindre 30, qui vient en appui contre le piston 31. La tige 41 est solidaire d'un piston pneumatique 42 (c'est à dire d'un piston soumis à une pression de gaz) disposé dans un cylindre 43 coaxial au cylindre 30 et fixé à ce dernier. Le diamètre du piston 42 est généralement supérieur au diamètre de la partie 31b du piston 31. Ces diamètres sont déterminés pour obtenir les efforts souhaités compte tenu des pressions mises en jeu. La tige 41 traverse le fond du cylindre 43.

La chambre 44 du cylindre 43 située du côté de la tige 41 est mise à l'atmosphère par au moins un orifice, non visible sur les dessins. De même la chambre 45 de l'alésage 30b, qui reçoit la tige 41, est reliée à l'atmosphère par au moins un orifice, non visible sur les dessins.

La piston 42, du côté opposé à la tige 41, a une section S4 et délimite dans le cylindre 43 une chambre 46 de même section S4. Cette chambre 46 est reliée par un orifice 47, prévu dans la paroi de fond éloignée du cylindre 30, à une canalisation 48 elle-même reliée à une source de pression pneumatique extérieure 49. La source 49 peut être en particulier une source d'air comprimé pour une suspension pneumatique. A titre d'exemple non limitatif, la pression d'air comprimé fournie par la canalisation 48 est de l'ordre de 10 bars.

Un clapet antiretour 50 est disposé sur la canalisation 48, au voisinage de l'orifice 47, de manière à permettre l'entrée d'air sous pression dans la chambre 46 depuis la canalisation 48, et à empêcher un flux d'air en sens inverse.

Un ressort de compression 51 est disposé dans la chambre 46 entre le piston 42 et le fond de la chambre pour agir dans le même sens que la pression d'air. Ce ressort 51 n'exerce qu'un effort de rappel du piston 42, négligeable vis à vis des forces mises en jeu par les pressions.

Le piston 31 du simulateur est ainsi soumis, dans un sens, à la pression de liquide provenant du maître-cylindre 17 et s'exerçant sur la petite section 31a et, dans le sens opposé, à une force antagoniste qui dépend de la course de la pédale 16. Cette force antagoniste est égale à la différence entre la force élastique exercée par le piston 42 et transmise par la tige 41, et la force variable produite par la pression modulée Pehb sur la surface S3 du piston étagé 31.

Le simulateur M intervient lorsque le système de freinage de service fonctionne normalement. Dans ce cas, les valves 28 et 26 sont fermées de sorte que le liquide de la chambre 21 est emprisonné dans un volume constant ; la pression régnant dans cette chambre 21 est la même que celle régnant dans la chambre 22 reliée à la canalisation 33.

Fig.2 est un schéma simplifié permettant d'établir les relations entre les différentes grandeurs. Les différents paramètres sont désignés comme suit:

Ftige =     force exercée par la pédale 16 sur la tige 20
Pmc =     pression dans le maître-cylindre 17
S1 =     section du maître-cylindre 17
Xt =     déplacement de la tige 20 et du piston 18
S2 =     section de la partie 31a
Xsimu =     déplacement du piston 31
S3=     section de la chambre annulaire 34
Pehb =     pression modulée admise à l'orifice 35
S4 =     section du piston 42, du côté de la chambre 46
P0 =     pression initiale dans la chambre 46
V0 =     volume initial de la chambre 46
h0 =     longueur axiale initiale de la chambre 46.

En l'absence de fuites de liquide :
S1.Xt = S2.Xsimu     d'où     Xt = (S2/S1) . Xsimu.

Ceci étant, le fonctionnement de l'installation est le suivant.

A l'état de repos, c'est-à-dire lorsque la pédale 16 n'est pas actionnée, les différents éléments de l'installation occupent les positions représentées sur Fig.1.

Dès que la pédale 16 est actionnée, le contact 23 envoie au calculateur C une information de début de freinage. Le calculateur C commande la fermeture des valves 26 et 28 de manière à isoler le maître-cylindre 17 des freins 2a, 2b des roues avant. Le calculateur C commande en outre les électrovalves 9a-9d et 14a-14d de manière à établir dans les freins de roues 2a-2d une pression qui dépend de la course de la pédale 16, notamment de sa position et de sa vitesse de déplacement. D'autres facteurs, par exemple détection d'un blocage des roues, peuvent être pris en compte par le calculateur C pour agir sur la pression des freins.

Le calculateur C commande en outre les valves 36, 37 de manière à établir à l'entrée 35 une pression de commande modulée Pehb qui varie suivant une loi déterminée en fonction de la course de la pédale.

Sur Fig.3 la courbe L1 représente un exemple de loi de variation de la pression Pehb, dont les valeurs sont portées en ordonnée suivant l'échelle graduée en bars située à droite, en fonction de la course de la pédale portée en abscisse et exprimée en millimètres.

Le piston 42, lorsqu'il se déplace dans le sens assurant une augmentation du volume de la chambre 46, est soumis à une pression d'air égale à celle fournie par la canalisation 48. Par contre, lorsque le piston 42 se déplace dans le sens qui réduit le volume de la chambre 46, le clapet 50 se ferme, et le volume de gaz emprisonné dans la chambre 46 subit une compression, généralement considérée comme adiabatique, de sorte que la pression d'air dans la chambre 46 augmente.

La force créée par la pression Pehb sur la section S3 du piston 31 vient se soustraire de la force exercée par le piston 42. La pression Pmc du maître-cylindre, appliquée à la section S2 de la partie 31a, équilibre cette différence. Cette pression Pmc appliquée au piston 18 du maître-cylindre crée la réaction s'opposant à l'avance de la pédale 16.

En désignant par Px la pression dans la chambre 46, pour une longueur axiale (h0 - Xt) de cette chambre, on peut écrire:

$$Ftige = Pmc.S2 = (Px . S4) - (Pehb. S3)$$

On peut en déduire les différentes grandeurs à partir de la relation entre la pression Px et le volume de la masse d'air emprisonnée dans la chambre 46.

La variation de la force Ft à exercer sur la tige 20 en fonction de la course de cette tige est représentée sur Fig.3 par la courbe G1, les valeurs de la force Ft étant portées en ordonnée suivant l'échelle graduée en newtons située à gauche.

La loi de commande L1 de la pression Pehb peut être modifiée à volonté en programmant le calculateur C. Ceci permet de modifier à volonté la courbe G1, sans avoir à modifier le matériel.

Au début de la course de la pédale 16, on souhaite que la force à exercer sur la tige 20 ne soit pas trop élevée de sorte que la pression Pehb pour les faibles courses est relativement forte afin de soulager l'effort sur la pédale 16.

Plus la pédale 16 est enfoncée, plus de liquide est envoyé de la chambre 22 dans l'alésage 30a. Le piston 31 se déplace vers le cylindre 43 en repoussant la tige 41 et le piston 42. Le volume d'air emprisonné dans la chambre 46 exerce une pression croissante qui assure l'augmentation de la force à exercer sur la tige 20. La pression Pehb diminue à partir d'une certaine valeur de la course de la pédale 16 pour que la résistance à l'avancement de la pédale soit suffisamment forte vers la fin de course.

Le conducteur prend ainsi conscience du niveau de freinage excercé, indépendamment de son effort musculaire, par une source d'énergie extérieure.

Fig. 4 illustre par une courbe K1 la variation de la pression pneumatique Px (dans la chambre 46) portée en ordonnée et exprimée en bars, en fonction de la course du piston 42 portée en abscisse et exprimée en millimètres.

En cas de défaillance du système de freinage de service, le calculateur C détecte cette défaillance, par exemple par une valeur trop faible de la pression fournie par les capteurs 13a-13d alors que la pédale 16 s'est déplacée.

Le calculateur C maintient alors les valves 26, 28 dans leur position ouverte de sorte que du liquide sous pression provenant du maître-cylindre 17 peut se diriger, suivant deux circuits indépendants, vers les freins 2a et 2b, ce qui permet un freinage de secours.

En outre, le liquide contenu dans l'alésage 30a est refoulé par l'action du piston 42 qui reste soumis à la pression pneumatique et qui établit dans l'alésage 30a une pression largement supérieure à celle qui règne dans la chambre 22 du maître-cylindre. Le piston 31 est ainsi repoussé, vers la gauche selon la représentation de Fig.1, et renvoie du liquide dans la canalisation 27 qui alimente le frein 2a, ce qui permet de mieux satisfaire aux exigences de freinage.

En effet, en cas de défaillance du système de freinage de service, il faut que le freinage de secours, à énergie musculaire, permette de freiner avec une décélération suffisante, actuellement fixée à 0,3 g, en réponse à une force déterminée, par exemple de 500 newtons (500N), sur la pédale de frein 16. La récupération du volume de liquide provenant de l'alésage 30a du simulateur, pour le freinage de secours, permet d'assurer un tel freinage de secours même sur un véhicule relativement lourd, par exemple de l'ordre de 4000 kg.

## Revendications

1. Installation de freinage hydraulique pour véhicule comportant, pour actionner des freins de roues :

   - un système de freinage de service (A) alimenté en liquide sous pression par une centrale hydraulique (3) à énergie extérieure ;
   - un système de freinage de secours (B) à énergie musculaire ;
   - un organe de commande manuelle (D,16) dont l'avance actionne le système de freinage de service ou, en cas de défaillance de ce dernier, le freinage de secours ;
   - un maître-cylindre (17) avec au moins un piston primaire (18) dont le déplacement est assuré par l'organe de commande manuelle ;
   - au moins une valve de sécurité (26,28) permettant soit d'isoler le maître-cylindre (17) des freins de roues (2a,2b) lorsque le freinage de service fonctionne normalement, soit, en cas de défaillance du freinage de service, de relier le maître-cylindre à au moins un frein de roue ;
   - un simulateur de sensation (M) pour opposer à l'avance de l'organe de commande manuelle (D,16) une réaction reflétant le déroulement du freinage, ce simulateur comprenant un cylindre (30) dans lequel coulisse un piston de simulateur (31) soumis dans un sens à une pression de liquide provenant du maître-cylindre (17) et, dans le sens opposé, à une force antagoniste dépendant de la course de l'organe de commande manuelle ;
   - des électrovalves d'admission de liquide sous pression (9a-9d) et des électrovalves d'échappement (14a-14d) reliées aux freins de roues ;
   - des capteurs (8, 13a-13d, 24, 29) pour saisir différents paramètres du freinage, notamment la course de l'organe de commande manuelle, et des pressions en différents points de l'installation ;
   - et un calculateur (C), relié aux divers capteurs, propre à commander les électrovalves de manière à assurer les pressions souhaitées dans les freins de roues, dans laquelle la force antagoniste dans le simulateur (M) résultant de l'action, sur une surface (S3) du piston (31) de simulateur, d'une pression modulée (Pehb) établie à partir de la pression de liquide fournie par la centrale hydraulique (3) **caractérisée par le fait que** la pression modulée (Pehb) est commandée par le calculateur (C) suivant une loi déterminée (L1), modifiable à volonté, en fonction de la course de la pédale et **par le fait que** la force antagoniste, dans le simulateur (M), est la résultante d'une force élastique agissant sur le piston de simulateur (31) en sens opposé à la pression de liquide provenant du maître-cylindre (17) et d'une force variable opposée à la force élastique, cette force variable étant produite par la pression modulée (Pehb) qui agit sur une surface (S3) du piston de simulateur.

2. Installation selon la revendication 1, **caractérisée par le fait que** la surface (S3) du piston de simulateur soumise à la pression modulée (Pehb) délimite une chambre (34) de volume variable reliée, en parallèle, à une électrovalve (36) d'admission de liquide sous pression fourni par la centrale hydraulique (3), et une électrovalve d'échappement (37) reliée à la bâche (9), l'ouverture et la fermeture de ces électrovalves (36, 37) étant commandées par le calculateur (C) pour que la pression (Pehb) dans la chambre (34) du simulateur suive la loi souhaitée.

3. Installation selon la revendication 2 , **caractérisée par le fait que** les électrovalves (36, 37) reliées à la chambre (34) du simulateur sont du type "tout ou rien".

4. Installation selon la revendication 2 ou 3 , **caractérisée par le fait que** la chute de pression entre l'entrée et la sortie des électrovalves (36, 37) est linéaire en fonction de l'intensité du courant de commande.

5. Installation selon l'une quelconque des revendications précédentes, **caractérisée par le fait que** le cylindre (30) du simulateur comporte deux alésages coaxiaux (30a, 30b) de diamètres différents, qui communiquent, et un piston étagé (31) comportant une partie de petit diamètre (31a) qui coulisse de manière étanche dans l'alésage de petit diamètre (30a), et une partie de plus grand diamètre (31b) qui coulisse de manière étanche dans l'alésage de grand diamètre (30b), le fond (30c) de l'alésage de petit diamètre comportant un orifice (32) relié au maître-cylindre de sorte que la pression de liquide du maître-cylindre est appliquée sur la petite section (S2) du piston étagé, tandis qu'une chambre annulaire (34) est formée entre la paroi de transition (30d) de l'alésage et la grande section du piston étagé, cette chambre annulaire étant reliée en parallèle aux électrovalves (36, 37) respectivement d'admission et d'échappement.

6. Installation selon la revendication 1 à 5, **caractérisée par le fait que** la force élastique est produite par au moins un moyen de rappel élastique.

7. Installation selon la revendication 6, **caractérisée par le fait que** le moyen de rappel élastique comprend un ressort pneumatique (42,43).

8. Installation selon les revendications 1 à 5, **caractérisée par le fait que** le fond (30e) du cylindre de simulateur fermant l'alésage de grande section du côté opposé à l'alésage de petite section comporte une ouverture (40) pour le passage d'une tige (41) qui vient en appui contre la grande section (31b) du piston étagé (31) et qui exerce sur ce piston la force élastique.

9. Installation selon la revendication 8, **caractérisée par le fait que** la tige (41) est solidaire d'un piston pneumatique (42) qui coulisse dans un cylindre pneumatique (43) lui-même solidaire du cylindre (30) de simulateur, ce cylindre pneumatique étant relié à une source de pression pneumatique extérieure (49), en particulier prévue pour une suspension

10. Installation selon la revendication 9, **caractérisée par le fait qu'**un clapet antiretour (50) est disposé sur une canalisation d'air sous pression (48) reliée au cylindre pneumatique, ce clapet permettant l'entrée d'air sous pression dans le cylindre et s'opposant à sa sortie.

11. Installation selon les revendications 9 ou 10, **caractérisée par le fait qu'**un ressort mécanique de compression (51) est disposé dans le cylindre pneumatique pour agir sur le piston pneumatique dans le même sens que la pression d'air.

**Patentansprüche**

1. Hydraulische Bremsanlage für ein Kraftfahrzeug, die zur Betätigung von Radbremsen folgendes aufweist:

   - ein Betriebsbremssystem (A), das von einer Hydraulikzentrale (3) mit externer Energie mit unter Druck stehender Flüssigkeit versorgt wird;

   - ein Hilfsbremssystem (B) mit Muskelenergie;

   - ein manuelles Steuerorgan (D, 16), dessen Vorschieben das Betriebsbremssystem oder, falls dieses ausfällt, die Hilfsbremsung in Betrieb setzt;

   - einen Hauptzylinder (17) mit mindestens einem Primärkolben (18), dessen Verlagerung durch das manuelle Steuerorgan gewährleistet ist;

- mindestens ein Sicherheitsventil (26, 28), das es entweder ermöglicht, den Hauptzylinder (17) von den Radbremsen (2a, 2b) zu trennen, wenn die Betriebsbremsung normal funktioniert, oder beim Ausfall der Betriebsbremsung den Hauptzylinder mit mindestens einer Radbremse zu verbinden;

- einen Gefühlssimulator (M), um dem Vorschieben des manuellen Steuerorgans (D, 16) eine Reaktion entgegenzusetzen, die den Ablauf der Bremsung reflektiert, wobei dieser Simulator einen Zylinder (30) aufweist, in dem ein Simulatorkolben (31) gleitet, welcher in einer Richtung einem Druck der Flüssigkeit aus dem Hauptzylinder (17) und in der entgegengesetzten Richtung einer entgegenwirkenden Kraft ausgesetzt ist, welche von dem Weg des manuellen Steuerorgans abhängig ist;

- Magnetventile (9a - 9d) für den Einlass von unter Druck stehender Flüssigkeit und Auslassmagnetventile (14a - 14d), die mit den Radbremsen verbunden sind;

- Sensoren (8, 13a-13d, 24, 29), die verschiedene Parameter der Bremsung, insbesondere den Weg des manuellen Steuerorgans, und Drücke an verschiedenen Stellen der Anlage erfassen;

- und einen Rechner (C), der mit den verschiedenen Sensoren verbunden und dazu geeignet ist, die Magnetventile so zu steuern, dass in den Radbremsen die gewünschten Drücke gewährleistet sind, wobei die entgegenwirkende Kraft in dem Simulator (M) aus der Wirkung eines modulierten Drucks (Pehb) auf eine Oberfläche (S3) des Kolbens (31) des Simulators resultiert, wobei der modulierte Druck (Pehb) ausgehend von dem durch die Hydraulikzentrale (3) bereitgestellten Flüssigkeitsdruck aufgebaut wird, **dadurch gekennzeichnet, dass** der modulierte Druck (Pehb) gemäß einem bestimmten, beliebig veränderbaren Gesetz (L1) in Abhängigkeit von dem Pedalweg von dem Rechner (C) gesteuert wird und dass die entgegenwirkende Kraft in dem Simulator (M) die Resultierende einer elastischen Kraft ist, die auf den Simulatorkolben (31) in eine Richtung wirkt, welche zu derjenigen des Drucks der Flüssigkeit aus dem Hauptzylinder (17) entgegengesetzt ist, und einer variablen Kraft, die zur elastischen Kraft entgegengesetzt ist, wobei diese variable Kraft durch den modulierten Druck (Pehb) erzeugt wird, der auf eine Oberfläche (S3) des Simulatorkolbens wirkt.

2. Anlage nach Anspruch 1, **dadurch gekennzeichnet, dass** die Oberfläche (S3) des Simulatorkolbens, die dem modulierten Druck (Pehb) ausgesetzt ist, eine Kammer (34) mit variablem Volumen begrenzt, die parallel mit einem Magnetventil (36) für den Einlass von unter Druck stehender Flüssigkeit, welche von der Hydraulikzentrale (3) bereitgestellt wird, und mit einem mit dem Behälter (9) verbundenen Auslassmagnetventil (37) verbunden ist, wobei das Öffnen und Schließen dieser Magnetventile (36, 37) von dem Rechner (C) so gesteuert werden, dass der Druck (Pehb) in der Kammer (34) des Simulators dem gewünschten Gesetz folgt.

3. Anlage nach Anspruch 2, **dadurch gekennzeichnet, dass** die mit der Kammer (34) des Simulators verbundenen Magnetventile (36, 37) "Alles-oder-nichts"-Magnetventile sind.

4. Anlage nach Anspruch 2 oder 3, **dadurch gekennzeichnet, dass** der Druckabfall zwischen dem Eingang und dem Ausgang der Magnetventile (36, 37) in Abhängigkeit von der Stärke des Steuerstroms linear ist.

5. Anlage nach einem der vorhergehenden Ansprüche, **dadurch gekennzeichnet, dass** der Zylinder (30) des Simulators zwei koaxiale, kommunizierende Bohrungen (30a, 30b) mit unterschiedlichem Durchmesser und einen abgestuften Kolben (31) aufweist, welcher einen Abschnitt (31a) mit kleinem Durchmesser aufweist, der in dichter Weise in der Bohrung (30a) mit kleinem Durchmesser gleitet, und einen Abschnitt (31 b) mit größerem Durchmesser, der in dichter Weise in der Bohrung (30b) mit großem Durchmesser gleitet, wobei der Boden (30c) der Bohrung mit kleinem Durchmesser eine Öffnung (32) aufweist, die mit dem Hauptzylinder so verbunden ist, dass der kleine Querschnitt (S2) des abgestuften Kolbens mit dem Druck der Flüssigkeit des Hauptzylinders beaufschlagt wird, während eine ringförmige Kammer (34) zwischen der Übergangswand (30d) der Bohrung und dem großen Querschnitt des abgestuften Kolbens gebildet ist, wobei diese ringförmige Kammer parallel mit dem Einlass- bzw. dem Auslassmagnetventil (36 bzw. 37) verbunden ist.

6. Anlage nach den Ansprüchen 1 bis 5, **dadurch gekennzeichnet, dass** die elastische Kraft durch mindestens ein elastisches Rückstellmittel erzeugt wird.

7. Anlage nach Anspruch 6, **dadurch gekennzeichnet, dass** das elastische Rückstellmittel eine pneumatische Feder (42, 43) aufweist.

8. Anlage nach den Ansprüchen 1 bis 5, **dadurch ge-**

**kennzeichnet, dass** der Boden (30e) des Simulatorzylinders, der die Bohrung mit großem Querschnitt auf der Seite schließt, die zur Bohrung mit kleinem Querschnitt entgegengesetzt ist, eine Öffnung (40) für den Durchgang einer Stange (41) aufweist, die an dem großen Querschnitt (31b) des abgestuften Kolbens (31) in Anlage gelangt und auf diesen Kolben die elastische Kraft ausübt.

9. Anlage nach Anspruch 8, **dadurch gekennzeichnet, dass** die Stange (41) fest mit einem pneumatischen Kolben (42) verbunden ist, der in einem pneumatischen Zylinder (43) gleitet, welcher selbst fest mit dem Zylinder (30) des Simulators verbunden ist, wobei dieser pneumatische Zylinder mit einer äußeren pneumatischen Druckquelle (49) verbunden ist, die insbesondere für eine Aufhängung vorgesehen ist.

10. Anlage nach Anspruch 9, **dadurch gekennzeichnet, dass** ein Rückschlagventil (50) an einer Druckluftleitung (48) angeordnet ist, welche mit dem pneumatischen Zylinder verbunden ist, wobei dieses Ventil das Einströmen von Druckluft in den Zylinder ermöglicht und deren Ausströmen verhindert.

11. Anlage nach Anspruch 9 oder 10, **dadurch gekennzeichnet, dass** eine mechanische Druckfeder (51) in dem pneumatischen Zylinder so angeordnet ist, dass sie in die gleiche Richtung auf den pneumatischen Kolben wirkt wie der Luftdruck.

**Claims**

1. Hydraulic braking apparatus intended for a motor vehicle and comprising, for the actuation of the wheel brakes :

   - a service braking system (A), supplied with a pressure brake fluid by a central hydraulic unit (3), using an external energy source ;
   - an emergency braking system (B), controlled by muscular energy ;
   - a hand-control member (D, 16), the forward travel of which actuates the service braking system or, in the case of a failure of the latter, the emergency braking system ;
   - a master cylinder (17) having at least one primary piston (18), the stroke of which is controlled by the hand-control member ;
   - at least one safety valve (26, 28), capable either of separating the master cylinder (17) from the wheel brakes (2a, 2b) when the service braking system operates properly or, should the service braking system fail to operate correctly, of connecting the master cylinder with at least one wheel brake ;

   - a feeling simulator (M), intended to resist the forward motion of the hand-control member (D, 16) with a reaction corresponding to the progress of a braking operation, such simulator comprising a cylinder (30) in which a simulator piston (31) may slide while being subjected, in one direction, to a fluid pressure coming from the master cylinder (17) and, in the opposite direction, to a counterforce dependent on the travel of the hand-control member ;
   - pressure-fluid admission solenoid valves (9a-9d) and exhaust solenoid valves (14a-14d), connected to the wheel brakes ;
   - sensors (8, 13a-13d, 24, 29) for the detection of various braking parameters, in particular the travel of the hand-control member, and the pressures at various spots of the apparatus ;
   - and a computer (C), connected to the various sensors and capable of controlling the solenoid valves so as to obtain the desired pressures in the wheel brakes wherein the counterforce within the simulator (M) results from the action, on a surface (S3) of the simulator piston (31), of a modulated pressure (Pehb), which comes from the fluid pressure supplied by the central hydraulic unit (3), **characterised in that** the modulated pressure (Pehb) is controlled by the computer (C) in accordance with a determined law (L1), alterable ad lib as a function of the pedal travel and wherein in the simulator (M), the counterforce is the resultant of a resilient force acting upon the simulator piston (31) in the opposite direction to the fluid pressure coming from the master cylinder (17), and of a variable force resisting the resilient force, such variable force being generated by the modulated pressure (Pehb) acting on a surface (S3) of the simulator piston.

2. Apparatus according to claim 1, **characterised in that** the surface (S3) of the simulator piston, which is under the modulated pressure (Pehb), defines a variable-capacity chamber (34) connected in parallel to an admission solenoid valve (36), for the pressure fluid supplied by the central hydraulic unit (3), and to an exhaust solenoid valve (37), connected to the feed tank (9), the opening and closing of said solenoid valves (36, 37) being controlled by the computer (C) so that the pressure (Pehb) inside the simulator chamber (34) may follow the desired law.

3. Apparatus according to claim 2, **characterised in that** the solenoid valves (36, 37), connected to the chamber (34) of the simulator, are of the "on/off" type.

4. Apparatus according to claim 2 or 3, **characterised in that** the pressure drop between the inlets and the outlets of the solenoid valves (36, 37) is linear dependently on the control current strength.

5. Apparatus according to any one of the preceding claims, **characterised in that** the cylinder (30) of the simulator comprises two intercommunicating coaxial bores (30a, 30b) with different diameters, and a stepped piston (31) including a small-diameter portion (31a) sliding in a leakproof manner inside the small-diameter bore (30a), and a greater-diameter portion (31b) sliding in a leakproof manner in the large-diameter bore (30b), the end wall (30c) of the small-diameter bore comprising a port (32) connected to the master cylinder for the fluid pressure from the master cylinder to be applied to the small cross-section (S2) of the stepped piston, whereas an annular chamber (34) is defined between the transition wall (30d) of the bore and the large cross-section of the stepped piston, such annular chamber being connected in parallel to the respective admission and exhaust solenoid valves (36, 37).

6. Apparatus according to claims 1 to 5, **characterised in that** the resilient force is produced by at least one resilient return means.

7. Apparatus according to claim 6, **characterised in that** the resilient return means comprises an air spring (42, 43).

8. Apparatus according to claims 1 to 5, **characterised in that** the end wall (30e) of the simulator cylinder, which closes the large cross-section bore in the opposite direction to the small cross-section bore, comprises an opening (40) for the passage of a rod (41) resting on the large cross-section (31b) of the stepped piston (31) and exerting the resilient force on said piston.

9. Apparatus according to claim 8, **characterised in that** said rod (41) may be integral with a pneumatic piston (42) sliding inside a pneumatic cylinder (43), for its part integral with the simulator cylinder (30), said pneumatic cylinder being connected to an external air-pressure source (49) intended, more particularly, for a pneumatic suspension.

10. Apparatus according to claim 9, **characterised in that** a nonreturn valve (50) is provided on a pressure-air line (48) connected to the pneumatic cylinder, said valve allowing the inflow of the pressure air into the cylinder and opposing its outflow.

11. Apparatus according to claim 9 or 10, **characterised in that** a mechanical compression spring (51) is arranged inside the pneumatic cylinder to as to act upon the pneumatic piston in the same direction as the air pressure.

FIG.1

EP 1 358 098 B1

FIG.2

FIG.3

FIG.4